# EUROPEAN PATENT SPECIFICATION

(11) **EP 2 213 494 B1**
(45) Date of publication and mention of the grant of the patent: **20.02.2013**
(21) Application number: 09015208.3
(22) Date of filing: 08.12.2009
(51) Int. Cl.: B60K 1/02, B60L 11/18, B60K 6/28, B60K 6/26

(54) **All wheel drive electric vehicle power assist drive system**
Hilfsantriebssystem für ein Elektrofahrzeug mit Allradantrieb
Système de commande assistée pour véhicule électrique à quatre roues motrices

(30) Priority: 29.01.2009 US 322218
(43) Date of publication of application: 04.08.2010
(73) Proprietor: Tesla Motors, Inc., San Carlos, CA 94070 (US)
(72) Inventor: Yifan, Tang, Los Altos CA 94022 (US)
(74) Representative: Eisenführ, Speiser & Partner

(56) References cited:
- DE-T5-112006 000 801
- JP-A- 2003 092 805
- US-A- 5 549 172
- US-A1- 2004 222 771
- US-A1- 2006 185 915
- US-A1- 2007 284 159
- US-A1- 2008 032 162
- US-A1- 2008 251 246
- US-A1- 2008 276 825

## Description

### FIELD OF THE INVENTION

The present invention relates generally to electric vehicles and, more particularly, to an electric vehicle with an all wheel drive system.

### BACKGROUND OF THE INVENTION

The trend towards designing and building fuel efficient, low emission vehicles has increased dramatically over the last decade, this trend driven by concerns over the environment as well as increasing fuel costs. At the forefront of this trend has been the development of hybrid vehicles, vehicles that combine a relatively efficient combustion engine with an electric drive motor.

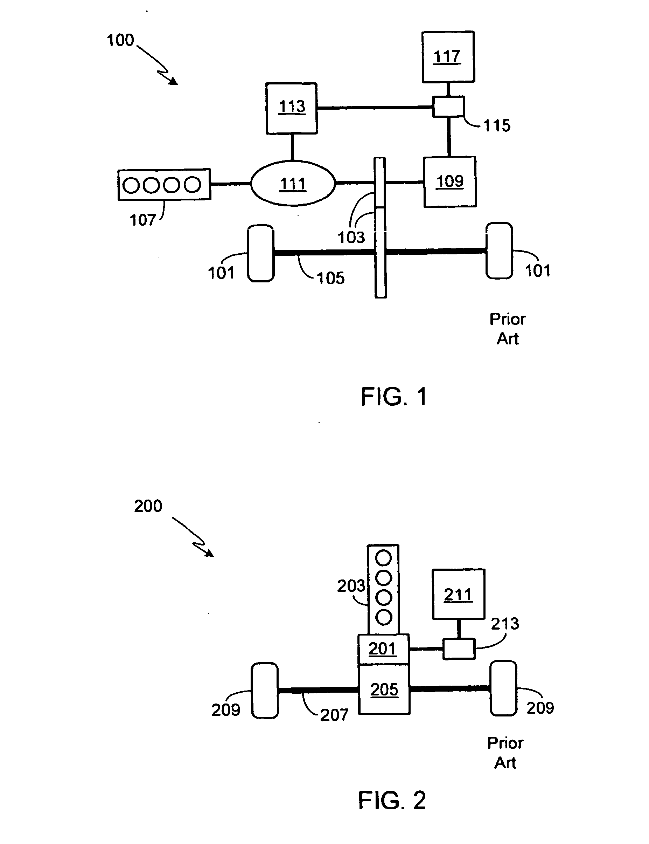

Currently, most common hybrids utilize a parallel drive system, although the implementation of the parallel drive system can vary markedly between different car manufacturers. In one form, illustrated in Fig. 1, power to wheels 101 is via planetary gears 103 and transaxle 105, the power coming from either, or both, combustion engine 107 and electric motor 109. A power splitter 111 splits the power from combustion engine 107 between generator 113 and the drive system, i.e., gears 103, axle 105 and wheels 101, the power split designed to maximize efficiency based on vehicle needs. The electric power generated by generator 113, after passing through an inverter 115, is used to either provide electricity to drive motor 109 or battery 117.

In hybrid system 100, motor 109 is the primary source of propulsion when the engine is relatively inefficient, for example during initial acceleration, when stationary, under deceleration or at low cruising speeds. Combustion engine 107 assists motor 109 in supplying propulsion power when demands on the vehicle are higher than what can be met by motor 109, for example during medium-to-hard acceleration, medium-to-high cruising speeds or when additional torque is required (e.g., hill climbing).

Fig. 2 illustrates the basic elements of another type of parallel drive system, often referred to as an integrated motor assist, or IMA, system. IMA system 200 utilizes a single electric motor 201 that is positioned between the combustion engine 203 and the drive system's transmission 205, transmission 205 coupling power through axle 207 to wheels 209. In this system motor 201 serves dual roles; first, as a drive motor and second, as a generator. In its capacity as a generator, motor 201 is coupled to battery pack 211 via inverter 213.

In hybrid system 200, engine 203 is the primary source of propulsion while motor 201 provides assistance during acceleration and cruising. During deceleration, motor 201 recaptures lost energy using a regenerative braking scheme, storing that energy in battery pack 211. As a result of this approach, a smaller and more fuel-efficient engine can be used without a significant lose in performance since motor 201 is able provide power assistance when needed.

Although hybrids, in general, provide improved fuel efficiency and lower emissions over those achievable by a non-hybrid vehicle, such cars typically have very complex and expensive drive systems due to the use of two different drive technologies. Additionally, as hybrids still rely on an internal combustion engine for a portion of their power, the inherent limitations of the engine prevent such vehicles from achieving the levels of pollution emission control and fuel efficiency desired by many. Accordingly several car manufacturers, including Tesla Motors, are studying and/or utilizing an all-electric drive system.

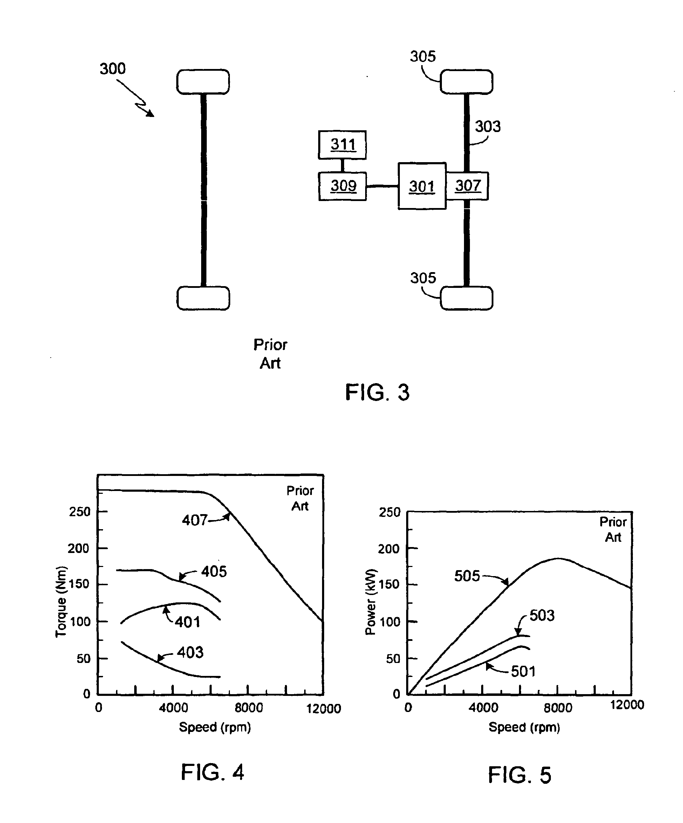

Fig. 3 illustrates the basic components associated with one configuration of an all-electric vehicle. As shown, EV 300 couples an electric motor 301 to axle 303 and wheels 305 via transmission/differential 307. A power control module 309 couples motor 301 to battery pack 311.

Figs. 4 and 5 graphically illustrate some of the performance differences between a vehicle using a combustion engine as the sole propulsion source, one using hybrid technology, and one using only a single electric motor. In the torque curves shown in Fig. 4, curve 401 illustrates the narrow region over which a typical combustion engine provides torque, and thus the reason why multiple gears are required to utilize such an engine efficiently. Curve 501 in Fig. 5 is the corresponding power curve for the combustion engine. In a hybrid configuration, the output from a combustion engine is combined with an electric motor, thus combining the low speed torque provided by the electric assist motor (curve 403) with that of the combustion engine (curve 401) to provide a dramatic improvement in low speed torque. Curves 405 and 503 illustrate the torque and power, respectively, of such a combination. Curves 407 and 505 illustrate the benefits of a high output power, all electric drive system, specifically showing both the low speed torque/power that such a system provides as well as the wide speed range over which such torque/power is available.

Although significant advancements have been made in the area of fuel efficient, low emission vehicles, further improvements are needed. For example, hybrid vehicles still rely on combustion engines for a portion of their power, thus not providing the desired levels of fuel independence and emission control. Current all electric vehicles, although avoiding the pitfalls associated with combustion engines, may not have the range, power or level of traction control desired by many. Accordingly, what is needed is an improved all-electric vehicle drive system. The present invention provides such a system.

The DE 11 2006 000801 T5 discloses an electric vehicle drive system and a method of operating such according to the preambles of claims 1 and 11, respectively.

### SUMMARY OF THE INVENTION

The present invention provides a method and apparatus for an all-electric vehicle using a primary drive system and a secondary drive system, the primary drive system utilizing a single electric motor and the secondary drive system utilizing at least one electric motor.

In at least one embodiment of the invention, an electric vehicle drive system is disclosed that includes a primary drive system, and first and second vehicle axles an assist drive system. The primary drive system includes a primary electric motor coupled to at least one wheel of said first axle, a primary inverter connected to the primary electric motor, a primary power control module connected to the primary inverter, and a primary electrical ESS connected to the primary power control module and providing power to the primary electric motor. The assist drive system includes an assist electric motor coupled to at least one wheel of said second axle, a secondary inverter connected to the assist electric motor, a secondary power control module connected to the secondary inverter, and a secondary electrical ESS connected to the secondary power control module and providing power to the assist electric motor. The drive system further comprises a bi-directional DC/DC converter, the bi-directional DC/DC converter providing an electrical path between the secondary ESS and the primary inverter via the primary power control module, and an electrical path between the primary ESS and the secondary inverter via the secondary power control module. The drive system further comprises a central power control module coupled to the primary and secondary power control modules. The assist drive system may further comprise a second assist electric motor coupled to a second wheel of the second axle, a second assist inverter connected to the second assist electric motor, a second assist power control module connected to the second assist inverter, wherein the secondary electrical ESS is connected to the second assist power control module and provides power to the second assist electric motor, and wherein the bi-directional provides an electrical path between the primary ESS and the second assist inverter via the second assist power control module, and wherein the central power control module is further coupled to the second assist power control module. The drive system may further comprise an energy transfer control module connected to the bi-directional DC/DC converter, wherein the energy transfer control module sends control signals to the bi-directional DC/DC converter. The drive system may further comprise a first state of charge sensor coupled to the primary electrical ESS and a second state of charge sensor coupled to the secondary electrical ESS, wherein the first and second state of charge sensors are connected to the energy transfer control module. The drive system can further comprise a first temperature sensor coupled to the primary electrical ESS and a second temperature sensor coupled to the secondary electrical ESS, wherein the first and second temperature sensors are connected to the energy transfer control module. The energy transfer module may be configured to maintain the secondary electrical ESS within a state of charge range of between 50% and 80% of the maximum operating capacity. The drive system may be configured such that the base speed of the assist drive system is at least 50% higher than the base speed of the primary drive system.

In at least one embodiment of the invention, a method of operating an electric vehicle is disclosed, the method comprising the steps of a) monitoring a first performance parameter associated with a primary electrical ESS, the primary electrical ESS supplying electrical energy to a first drive system, the first drive system comprised of a primary electric motor mechanically coupled to at least one wheel of a first axle of the electric vehicle, a primary inverter electrically connected to the primary electric motor, and a primary power control module electrically connected to, and interposed between, the primary inverter and the primary electrical ESS, b) transmitting a first output signal corresponding to the monitored first performance parameter to an energy transfer control module, c) monitoring a second performance parameter associated with a secondary electrical ESS, the secondary electrical ESS supplying electrical energy to a second drive system, the second drive system comprised of an assist electric motor mechanically coupled to at least one wheel of a second axle of the electric vehicle, a secondary inverter electrically connected to the assist electric motor, and a secondary power control module electrically connected to, and interposed between, the secondary inverter and the secondary electrical ESS, d) transmitting a second output signal corresponding to the monitored second performance parameter to the energy transfer control module, e) transmitting a control signal from the energy transfer control module to a bi-directional DC/DC converter in response to the first and second output signals, wherein the provision of said bi-directional Dc/Dc converter provides a first electrical path connecting said secondary ESS to said primary inverter via said primary power control module, and provides a second electrical path connecting said primary ESS to said first assist inverter via said first assist power control module, f) transferring energy between the primary electrical ESS, the secondary electrical ESS, the first drive system and the second drive system via the bi-directional DC/DC converter in response to the control signal, and g) repeating steps a) - f) at a first frequency throughout operation of the electric vehicle. The second drive system may further be comprised of a second assist electric motor mechanically coupled to a second wheel of the second axle, a second assist inverter electrically connected to the second assist electric motor, and a second assist power control module electrically connected to, and interposed between, the second assist inverter and the secondary ESS. The first performance parameter monitoring step may further comprise the step of monitoring a primary electrical ESS state of charge sensor, and the second performance parameter monitoring step may further comprise the step of monitoring a secondary electrical ESS state of charge sensor. The first performance parameter monitoring step may further comprise the step of monitoring a primary electrical ESS temperature sensor, and the second performance parameter monitoring step may further comprise the step of monitoring a secondary electrical ESS temperature sensor.

A further understanding of the nature and advantages of the present invention may be realized by reference to the remaining portions of the specification and the drawings.

### BRIEF DESCRIPTION OF THE DRAWINGS

Fig. 1 illustrates a parallel drive system according to the prior art;
Fig. 2 illustrates a parallel drive system based on an IMA configuration according to the prior art;
Fig. 3 illustrates an all-electric drive system according to the prior art;
Fig. 4 graphically illustrates the torque curves for a combustion engine, a hybrid configuration and an all-electric drive system according to the prior art;
Fig. 5 graphically illustrates the power curves for a combustion engine, a hybrid configuration and an all-electric drive system according to the prior art;
Fig. 6 illustrates the basic elements of a dual electric motor drive system in accordance with the invention;
Fig. 7 graphically illustrates the torque curves for preferred primary and assist motors;
Fig. 8 graphically illustrates the power curves for preferred primary and assist motors;
Fig. 9 illustrates the basic elements of a dual electric motor drive system in accordance with a first embodiment of the invention;
Fig. 10 illustrates the basic elements of a dual electric motor drive system in accordance with a second embodiment of the invention;
Fig. 11 illustrates the basic elements of a dual electric motor drive system in accordance with a third embodiment of the invention;
Fig. 12 illustrates the basic elements of a dual electric motor drive system in accordance with a fourth embodiment of the invention;
Fig. 13 illustrates the basic elements of a multi-electric motor drive system similar to that shown in Fig. 9, except for the use of dual assist motors;
Fig. 14 illustrates the basic elements of a multi-electric motor drive system similar to that shown in Fig. 10, except for the use of dual assist motors;
Fig. 15 illustrates the basic elements of a multi-electric motor drive system similar to that shown in Fig. 11, except for the use of dual assist motors; and
Fig. 16 illustrates the basic elements of a multi-electric motor drive system similar to that shown in Fig. 12, except for the use of dual assist motors.

### DESCRIPTION OF THE SPECIFIC EMBODIMENTS

In the following text, the terms "electric vehicle" and "EV" may be used interchangeably and refer to an all-electric vehicle. Similarly, the terms "hybrid", "hybrid electric vehicle" and "HEV" may be used interchangeably and refer to a vehicle that uses dual propulsion systems, one of which is an electric motor and the other of which is a combustion engine. Similarly, the terms "all-wheel-drive" and "AWD" may be used interchangeably and refer to a vehicle drive system in which every wheel, or every set of wheels sharing the same axel or axis, is provided with a separate motor. Similarly, the terms "battery", "cell", and "battery cell" may be used interchangeably and refer to any of a variety of different rechargeable cell chemistries and configurations including, but not limited to, lithium ion (e.g., lithium iron phosphate, lithium cobalt oxide, other lithium metal oxides, etc.), lithium ion polymer, nickel metal hydride, nickel cadmium, nickel hydrogen, nickel zinc, silver zinc, or other battery type/configuration. The term "battery pack" as used herein refers to multiple individual batteries contained within a single piece or multi-piece housing, the individual batteries electrically interconnected to achieve the desired voltage and current capacity for a particular application. The terms "energy storage system" and "ESS" may be used interchangeably and refer to an electrical energy storage system that has the capability to be charged and discharged such as a battery, battery pack, capacitor or supercapacitor. Lastly, identical element symbols used on multiple figures refer to the same component, or components of equal functionality.

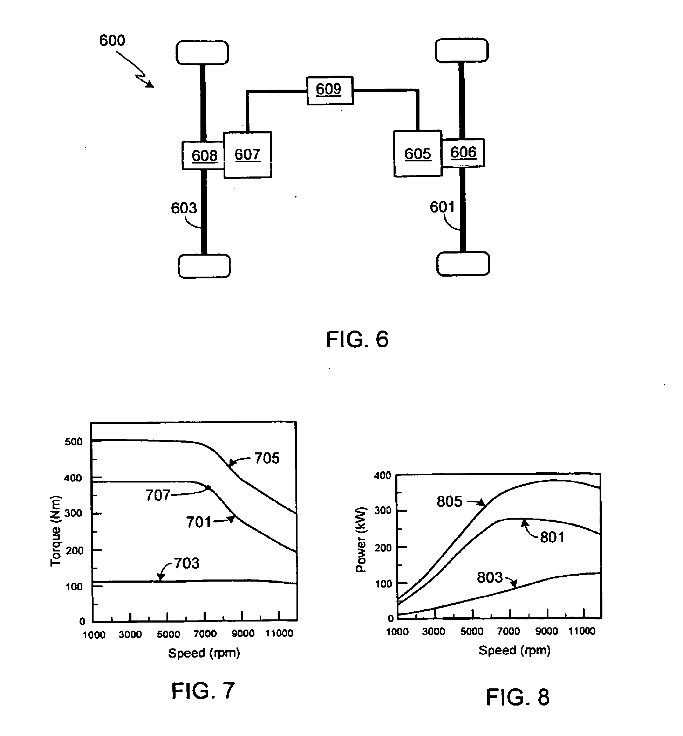

Fig. 6 illustrates the basic elements of a dual electric motor drive system 600 in accordance with the invention. As shown, power is independently sent to both sets of wheels, i.e., axles 601 and 603, via two different electric motor/transmission/differential assemblies 605/606 and 607/608. For purposes of this simplified illustration, a single ESS/power control module 609 is shown coupled to both motors 605/607, however, as described in detail below, the inventor envisions powering and controlling these two motors in a variety of ways and module 609 is only meant to represent, not limit, such means. Although not required by the invention, preferably one motor is the primary drive motor, e.g., motor 605, while the second motor, e.g., motor 607, is relegated to the role of an assisting motor. In a preferred embodiment of the invention, primary motor 605 is coupled to the rear wheel(s) of the vehicle while assist motor 607 is coupled to the front wheel(s) of the vehicle.

In a preferred embodiment of the invention, both motors 605 and 607 are AC induction motors. Additionally, in the preferred embodiment assist motor 607 is designed to have a relatively flat torque curve over a wide range of speeds, and therefore is capable of augmenting the output of primary motor 605 at high speeds, specifically in the range in which the torque of primary motor 605 is dropping off. Figs. 7 and 8 illustrate torque and power curves, respectively, of preferred motors. In particular, curves 701 and 801 represent the torque and power curves, respectively, of a preferred primary motor; curves 703 and 803 represent the torque and power curves, respectively, of a preferred assist motor; and curves 705 and 805 represent the torque and power curves, respectively, of the combination of the preferred primary and assist motors.

It will be understood that the gear ratios of transmission/differential elements 606 and 608 may be designed to be the same, or different, from one another. If they are the same, Figs. 7 and 8 show the motor speeds of both motors. If they are different, Figs. 7 and 8 show the motor speed of the primary motor, with the motor speed of the secondary motor converted based on a gear ratio conversion factor. Figs. 7 and 8 illustrate that in at least one preferred embodiment, the maximum amount of assist torque is designed to be substantially constant throughout the motor speed, and hence vehicle speed, range of operation (Fig. 7), and as a result the maximum amount of assist power increases as a function of motor speed (Fig. 8). This preferred embodiment applies to both the motoring and regenerating modes of operation. One benefit of this approach is that it can be used to compensate for torque fall-off at higher speeds, a characteristic typical of electric motors with limited operating voltage. Another benefit of significantly increasing the high speed capabilities of a vehicle in accordance with the preferred embodiment of the invention is improved vehicle performance, specifically in the areas of top speed, high speed acceleration, and hill climbing abilities. Lastly, utilizing the dual drive approach of the present invention, in some configurations it is possible to achieve a lower total motor weight than a single motor sized to provide similar peak power capabilities.

As previously noted, the curves shown in Figs. 7 and 8 assume the use of AC inductions motors even though this is not a requirement of the invention. Curve 701 illustrates a characteristic common of many such motors, i.e., exhibiting a relatively flat peak torque at low speeds which then drops off at higher speeds. As used herein, a motor's "base speed" is defined as the speed at which the torque drops to 95% of the flat peak torque and will continue to drop after the base speed up to the top speed under constant power source limits. Therefore, for curve 701, this knee point occurs at a point 707 on the curve, leading to a base speed of approximately 7200 rpm. As used herein, a motor's "drive system base speed" is equivalent to the motor's base speed after gearing, i.e., the motor base speed divided by the transmission gear ratio. As described above and illustrated in Figs. 7 and 8, preferably assist motor 607 is designed to provide a much higher drive system base speed than the drive system base speed of primary motor 605; more preferably assist motor 607 is designed to provide at least a 50% higher drive system base speed than the drive system base speed of primary motor 605.

The basic configuration illustrated in Fig. 6 provides a number of advantages over a single drive EV. First, the dual motor configuration provides superior traction control as power is coupled to both axles, therefore providing power to at least one wheel per axle. It will be appreciated that additional traction control can be achieved if one or both differentials utilize a limited slip or locking configuration, thereby coupling power to the remaining wheel or wheels. Second, by utilizing a dual motor configuration, regenerative braking can be used with respect to both sets of wheels, thus providing enhanced braking as well as improved battery charging capabilities. Third, assuming an assist motor with a relatively flat torque curve, in addition to providing additional power at all speeds, the assist motor provides greatly enhanced performance at high speeds when the primary motor starts losing torque.

In Fig. 6 and all subsequent embodiment illustrations, each motor is shown coupled to an axle via a transmission/differential element, e.g., elements 606 and 608. It should be understood that the present invention is not limited to a specific type/configuration of transmission or a specific type/configuration of differential. For example, although a single speed transmission is preferred, either or both transmissions can use a multi-speed transmission. Similarly, the differentials used with the present invention can be configured as open, locked or limited slip, although preferably an open or limited slip differential is used.

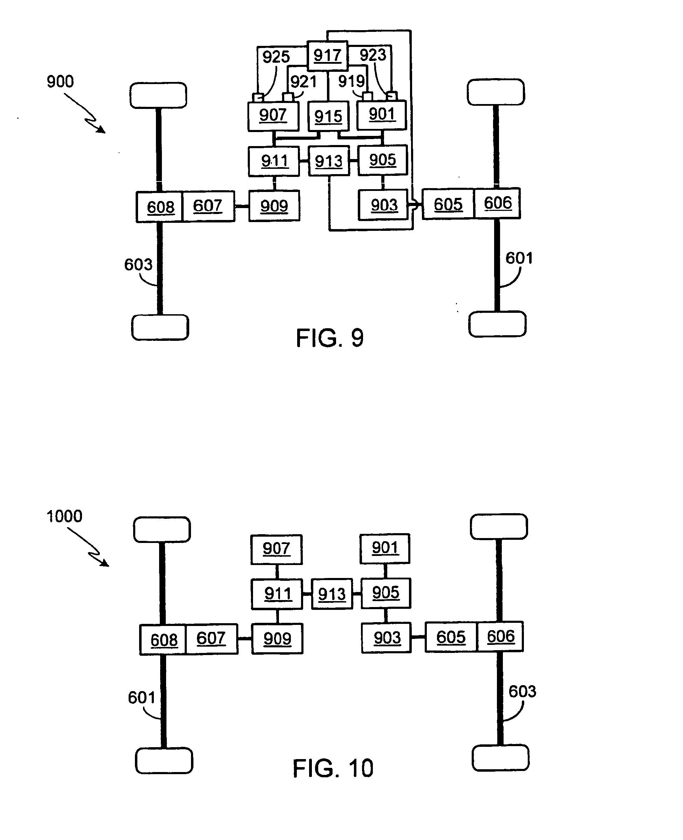

Fig. 9 illustrates a first preferred embodiment of the invention. As shown, primary motor 605 is connected to the primary ESS 901 via the main inverter 903 and the primary power control module 905. Primary power control module 905 is used to insure that the power delivered to motor 605 or the regenerated power recovered from motor 605 has the desired voltage, current, waveform, etc. Similarly, assist motor 607 is connected to a secondary ESS 907 via a secondary inverter 909 and a secondary power control module 911. The power control modules may be comprised of passive power devices (e.g., transient filtering capacitors and/or inductors), active power devices (e.g., semiconductor and/or electromechanical switching devices, circuit protection devices, etc.), sensing devices (e.g., voltage, current, and/or power flow sensors, etc.), logic control devices, communication devices, etc. In at least one embodiment, the primary and secondary power control modules 905/911 are under the control of a central power control module 913. Preferably each inverter 903/909 includes a DC to AC inverter.

As described above and shown in Fig. 9, each inverter 903/909 is coupled to its own ESS. Using dual ESS systems provides several benefits. First, the two ESS systems can be separately located within the vehicle, thus aiding in weight distribution. Second, each ESS system can have a smaller charge capacity than that which would be required by a single ESS system coupled to two motors. Third, each ESS system can be designed to meet the specific requirements of the motor to which it is coupled, e.g., allowing the assist motor ESS system to be smaller than the primary motor ESS system, assuming that the assist motor is a smaller, lower torque motor than the primary motor. Fourth, the charging and discharging characteristics of the two ESS systems can be designed to be significantly different from one another. For example, in at least one embodiment the maximum charge and discharge rates of the secondary ESS, e.g., ESS 907, are much higher than those of the primary ESS, e.g., ESS 901. Preferably in at least one embodiment, the minimum charge rate of the secondary ESS is 3C, where "C" is the full capacity of the secondary ESS divided by 1 hour in accordance with standard conventions.

An important feature of drive system 900 is a bi-directional DC/DC converter 915. DC/DC converter 915 provides a means for transferring energy in either direction between the two drive systems. DC/DC converter 915 is coupled to, and controlled by, an energy transfer control module 917. Energy transfer control module 917 monitors the condition of each ESS system, for example monitoring the state of charge of ESS 901 with sensor 919, and monitoring the state of charge of ESS 907 with sensor 921. In at least one embodiment, energy transfer control module 917 is configured to maintain one or both ESS systems within a preferred state of charge range, i.e., between a lower state of charge and an upper state of charge. For example, energy transfer control module 917 can be configured to maintain secondary ESS 907 between a lower limit and an upper limit, where the limits are defined in terms of a percentage of the maximum operating capacity of the ESS system. In at least one preferred embodiment, the limits for the assist drive system ESS, e.g., secondary ESS 907, are 50% of the maximum operating capacity for the lower limit and 80% of the maximum operating capacity for the upper limit. Accordingly in such an embodiment, the normal operating capacity for the assist drive system ESS is maintained between these two limits.

Preferably energy transfer control module 917 also monitors the temperature of ESS 901 with a temperature sensor 923, and monitors the temperature of ESS 907 with a temperature sensor 925. In at least one embodiment, energy transfer control module 917 also monitors central power control module 913, thereby monitoring the requirements being placed on the two drive systems.

As outlined below, bi-directional DC/DC converter 915 provides operational flexibility, and therefore a number of benefits, to various implementations of system 900.
i) Reserve Power - Bi-directional DC/DC converter 915 provides a path and means for one drive system to draw upon the energy resources of the other drive system when additional energy resources are required. As a result, the ESS systems can be designed with smaller charge capacities than would otherwise be required.
   For example, under normal operating conditions assist motor 607 may only be required to supply a minor amount of torque/power, therefore requiring that ESS 907 have only a relatively minor capacity. However, under conditions when additional torque/power assistance from motor 607 is required, system 900 allows motor 607 to draw from ESS 901 via DC/DC converter 915, secondary power control module 911 and inverter 909. Without converter 915, each ESS system would have to be designed with sufficient energy capacity to handle the expected demands placed on the system during all phases of operation.
ii) ESS Design Flexibility - Due to the inclusion of the bi-directional DC/DC converter 915, the ESS systems can be designed to optimize parameters other than just charge capacity. For example, in at least one embodiment ESS system 907 utilizes a supercapacitor module while ESS system 901 utilizes a conventional battery pack, e.g., one comprised of batteries that utilize lithium-ion or other battery chemistries. Bi-directional DC/DC converter 915 allows system 900 to take advantage of the benefits of each type of energy storage device without being severely impacted by each technology's limitations.
iii) Charging Flexibility - During vehicle operation, preferably regenerative braking is used to generate power that can be used to charge either, or both, ESS systems 901 and 907. In system 900, bi-directional DC/DC converter 915 allows the electrical power generated by either, or both, drive systems to be used to charge either, or both, ESS systems. As a result, the state of charge of both systems can be optimized relative to the available power.
   Although preferably both drive systems are used to generate power, in at least one configuration only one of the drive systems, for example the assist drive system, is used to provide drive power as well as generate electrical power via regenerative braking. In such a configuration, bi-directional DC/DC converter 915 allows the power generated by the single drive system during the regenerative braking cycle to be used to charge both ESS systems as required.
   In addition, in a system such as that shown in Fig. 9, the two ESS systems can utilize different charging profiles based on, and optimized for, their individual designs. For example, one of the ESS systems, e.g., secondary ESS 907, can be designed to accept a fast charging profile. Since the two ESS systems are isolated, except for the bi-directional DC/DC converter 915, the fast charging ESS system is not adversely affected by the slowing down effect of the other ESS system.
iv) Independent ESS/Drive System Desing/Implementation - The inclusion of the bi-directional DC/DC converter 915 provides additional flexibility in the design and optimization of the drive systems associated with each ESS system, for example allowing drive motors with different nominal voltage levels to be used.

Fig. 10 illustrates a second preferred embodiment of the invention. As shown, system 1000 is the same as system 900 except for the elimination of bi-directional DC/DC converter 915 and associated hardware. Eliminating the DC/DC converter effectively separates the electrical power aspects of the two drive systems. As a result, ESS systems 901 and 907 are designed to meet the expected needs of motors 605 and 607, respectively.

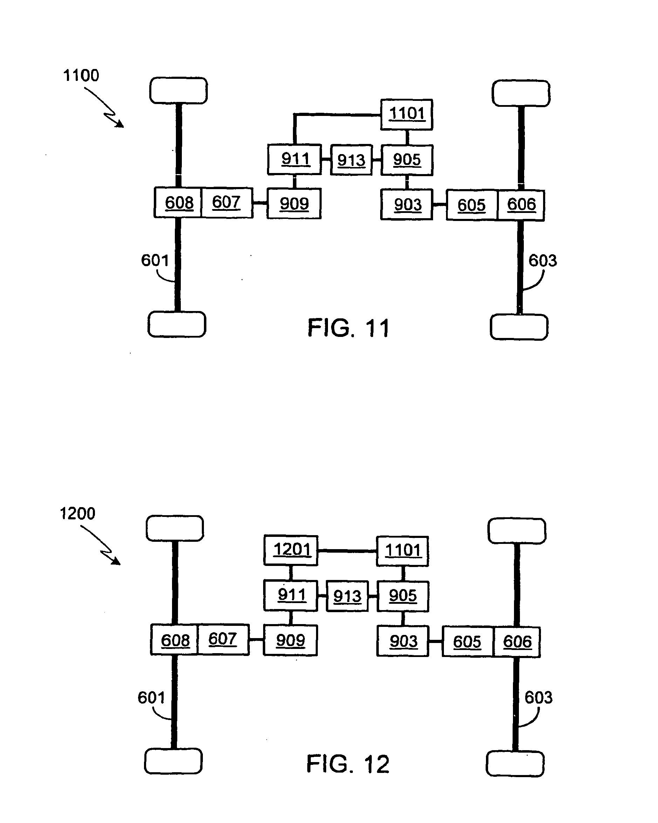

Fig. 11 illustrates a third preferred embodiment of the invention. As shown, system 1100 is the same as system 900 except for the elimination of the secondary ESS system and the bi-directional DC/DC converter and associated hardware. As a result of this modification to system 900, both drive motors, i.e., primary motor 605 and assist motor 607, share a single ESS system 1101. Accordingly, ESS system 1101 must have sufficient capacity to meet the expected needs of primary motor 605 as well as assist motor 607.

Fig. 12 illustrates a fourth preferred embodiment of the invention. As shown, system 1200 is the same as system 1100 except for the addition of a DC/DC converter 1201 between ESS system 1101 and secondary power control module 911/inverter 909. DC/DC converter 1201 allows motor 607 to have a DC bus nominal voltage range that is different from that of motor 605. It will be appreciated that a DC/DC converter could also be interposed between ESS 1101 and primary power control module 905/inverter 903, rather than between ESS 1101 and secondary power control module 911/inverter 909 as shown.

The inventor also envisions combining a primary drive system with dual assist motors, such a configuration using any of the ESS/converter configurations described above. Accordingly, systems 1300-1600 correspond to systems 900-1200, respectively. In general, in systems 1300-1600 single assist motor 607 is replaced with dual assist motors 1301 and 1303. Preferably assist motors 1301 and 1303 are coupled to wheels 1305 and 1307 via gear assemblies 1309 and 1311 and split axles 1313 and 1315. In these embodiments, motors 1301 and 1303 are coupled to an ESS system via secondary inverters 1317 and 1319 and secondary power control modules 1321 and 1323, respectively.

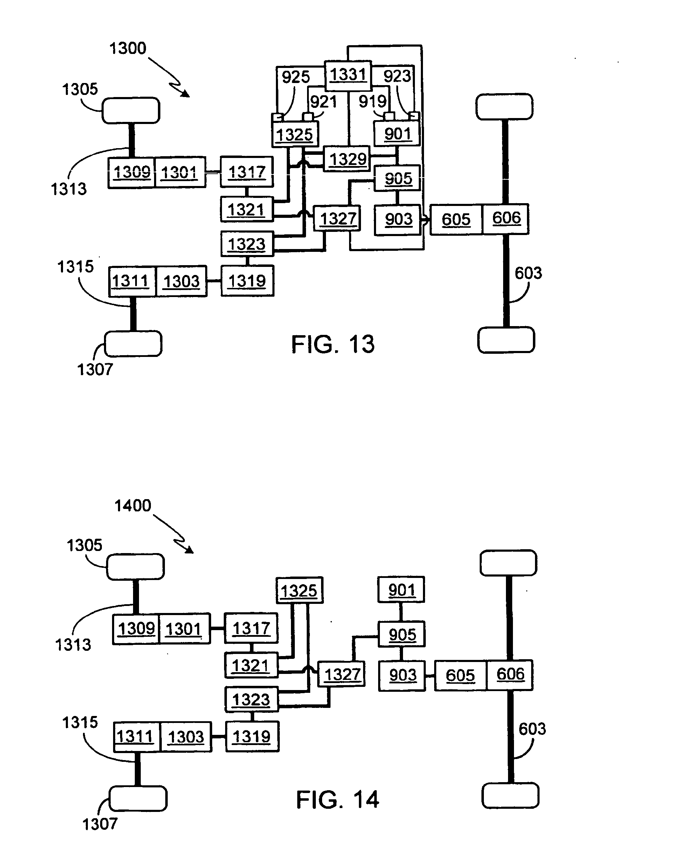

The embodiment shown in Fig. 13, as in the embodiment shown in Fig. 9, includes a secondary ESS system 1325. In system 1300, however, secondary ESS system 1325 provides power to two assist motors 1301/1303 via their inverters/power control modules. In at least one embodiment, the primary control module 905 and the two secondary power control modules 1321/1323 are under the control of a central power control module 1327. System 1300 also includes a bi-directional DC/DC converter 1329 that provides a means for transferring energy in either direction between the two drive systems in a manner similar to that of bi-directional DC/DC converter 915. As in system 900, preferably DC/DC converter 1329 is coupled to, and controlled by, an energy transfer control module 1331. Energy transfer control module 1331 monitors the condition of each ESS system, preferably monitoring the state of charge of ESS 901 with monitor 919, and monitoring the state of charge of ESS 1325 with sensor 921. In at least one embodiment, energy transfer control module 1331 monitors the temperature of ESS 901 with a temperature sensor 923, and monitors the temperature of ESS 1325 with a temperature sensor 925. In at least one embodiment, energy transfer control module 1331 also monitors central power control module 1327, thereby monitoring the requirements being placed on the two drive systems.

The embodiment shown in Fig. 14, as in the embodiment shown in Fig. 10, eliminates the bi-directional DC/DC converter and associated hardware, thereby effectively separating the electrical power aspects of the primary and assist drive systems.

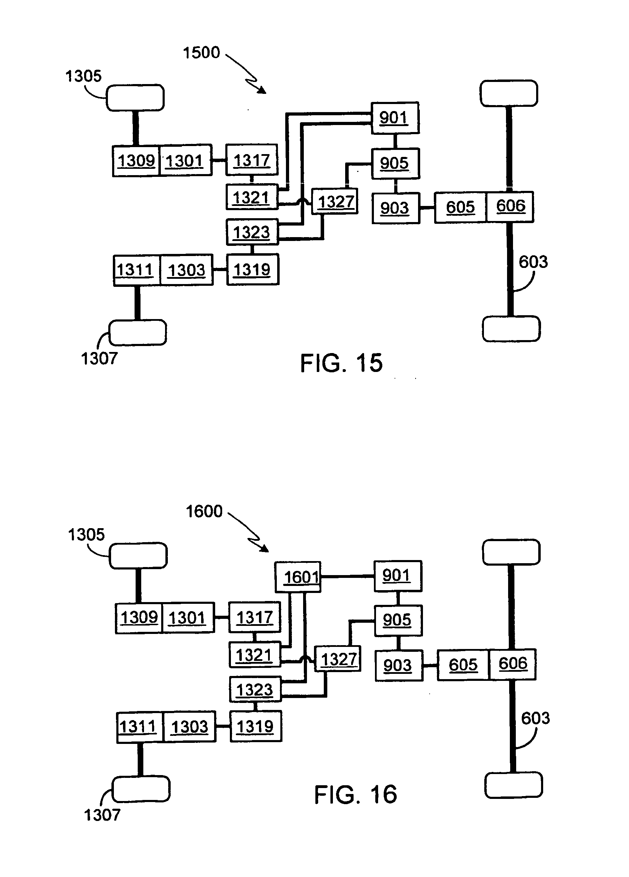

The embodiment shown in Fig. 15, as in the embodiment shown in Fig. 11, uses a single ESS system to provide power to both the primary and assist drive systems.

The embodiment shown in Fig. 16, as in the embodiment shown in Fig. 12, uses a single ESS system along with a DC/DC converter 1601 to provide power to both the primary and assist drive systems.

In the illustrated embodiments described above, it is preferred that AC induction motors be used for both the primary and assist motors. It should be understood, however, that the embodiments disclosed herein could also be used with other types of electric motors.

As will be understood by those familiar with the art, the present invention may be embodied in other specific forms without departing from the essential characteristics thereof. Accordingly, the disclosures and descriptions herein are intended to be illustrative, but not limiting, of the scope of the invention which is set forth in the following claims.

## Claims

1. An electric vehicle drive system, comprising:
a primary drive system, comprising:
a first vehicle axle (601);
a primary electric motor (605), said primary electric motor (605) mechanically coupled to at least one wheel of said first vehicle axle (601), wherein said primary electric motor (605) provides propulsion power to said at least one wheel of said first vehicle axle (601);
a primary inverter (903) electrically connected to said primary electric motor (605);
a primary power control module (905) electrically connected to said primary inverter (903); and
a primary electrical energy storage system (901), ESS, electrically connected to said primary power control module (905) and providing power to said primary electric motor (605);
an assist drive system, comprising:
a second vehicle axle (603);
an assist electric motor (607), said assist electric motor (607) mechanically coupled to at least one wheel of said second vehicle axle (603), wherein said assist electric motor (607) provides propulsion power to said at least one wheel of said second vehicle axle (603);
a secondary inverter (909) electrically connected to said assist electric motor (607);
a secondary electrical ESS (907) providing power to said assist electric motor (607);
a DC/DC converter (915) electrically connected to said primary drive system and to said assist drive system; and
a central power control module (913) coupled to said primary and secondary inverters (903, 909),
**characterized by**
a secondary power control module (911) electrically connected to said secondary inverter (909) and to said secondary electrical ESS (907);
wherein said DC/DC converter is a bi-directional DC/DC converter (915) and provides a first electrical path connecting said secondary electrical ESS (907) to said primary inverter (903) via said primary power control module (905), and wherein said bi-directional DC/DC converter (915) provides a second electrical path connecting said primary electrical ESS (901) to said secondary inverter (909) via said secondary power control module (911); and
wherein said central power control module (913) provides control signals to said primary and secondary power control modules (905, 911).

2. The electric vehicle drive system of claim 1, said assist drive system further comprising:
a second assist electric motor (1303), said second assist electric motor (1303) mechanically coupled to a second wheel (1307) of said second vehicle axle (1315), wherein said second assist electric motor (1303) provides propulsion power to said second wheel (1307) of said second vehicle axle (1315);
a second assist inverter (1319) electrically connected to said second assist electric motor (1303);
a second assist power control module (1323) electrically connected to said second assist inverter (1319); and
wherein said secondary electrical ESS (1325) is electrically connected to said second assist power control module (1323) and provides power to said second assist electric motor (1303), and wherein said bi-directional DC/DC converter (1329) provides a third electrical path connecting said primary electrical ESS (901) to said second assist inverter (1319) via said second assist power control module (1323), and wherein said central power control module (1327) is further coupled to said second assist power control module (1323).

3. The electric vehicle drive system of claims 1 or 2, further comprising an energy transfer control module (917; 1331) electrically connected to said bi-directional DC/DC converter (915; 1329), wherein said energy transfer control module (917; 1331) sends control signals to said bi-directional DC/DC converter (915; 1329).

4. The electric vehicle drive system of claim 3, further comprising a first state of charge sensor (919) coupled to said primary electrical ESS (901) and a second state of charge sensor (921) coupled to said secondary electrical ESS (907; 1325), wherein said first and second state of charge sensors (919, 921) are electrically connected to said energy transfer control module (917; 1331).

5. The electric vehicle drive system of claim 3, further comprising a first temperature sensor (923) coupled to said primary electrical ESS (901) and a second temperature sensor (925) coupled to said secondary electrical ESS (907; 1325), wherein said first and second temperature sensors (923, 925) are electrically connected to said energy transfer control module (917; 1331).

6. The electric vehicle drive system of claim 3, wherein said energy transfer control module (917; 1331) is electrically connected to said central power control module (913; 1327).

7. The electric vehicle drive system of claim 3, wherein said secondary electrical ESS (907; 1325) has a maximum operating capacity, and wherein said energy transfer control module (917, 1331) is configured to maintain said secondary electrical ESS (907; 1325) within a state of charge range of between 50% of said maximum operating capacity and 80% of said maximum operating capacity.

8. The electric vehicle drive system of claim 1, wherein a first drive system base speed corresponding to said assist drive system and said assist electric motor (607) is at least 50% higher than a second drive system base speed corresponding to said primary drive system and said primary electric motor (605).

9. The electric vehicle drive system of claim 2, wherein a first drive system base speed corresponding to said assist drive system and said assist electric motor (607) is at least 50% higher than a second drive system base speed corresponding to said primary drive system and said primary electric motor (605), and wherein a third drive system base speed corresponding to said assist drive system and said second assist electric motor (1303) is at least 50% higher than said second drive system base speed corresponding to said primary drive system and said primary electric motor (605).

10. The electric vehicle drive system of claims 1 or 2, wherein said secondary electrical ESS (907; 1325) has a minimum charge rate of 3C, where C is the full capacity of said secondary electrical ESS (907; 1325) divided by 1 hour.

11. A method of operating an electric vehicle, the method comprising the steps of:
a) monitoring a first performance parameter associated with a primary electrical energy storage system ESS (901), said primary electrical ESS (901) supplying electrical energy to a first drive system, said first drive system comprised of a primary electric motor (605) mechanically coupled to at least one wheel of a first axle (601) of the electric vehicle, a primary inverter (903) electrically connected to said primary electric motor (605), and a primary power control module (905) electrically connected to, and interposed between, said primary inverter (903) and said primary electrical ESS (901); and
b) monitoring a second performance parameter associated with a secondary electrical ESS (907), said secondary electrical ESS (907) supplying electrical energy to a second drive system, said second drive system comprised of a first assist electric motor (607) mechanically coupled to a first wheel of a second vehicle axle (603) of the electric vehicle, a first assist inverter (909) electrically connected to said first assist electric motor (607);
**characterized by** further comprising the step of:
c) transmitting a first output signal corresponding to said monitored first performance parameter to an energy transfer control module (917);
d) wherein said second drive system further comprises a first assist power control module (911) electrically connected to, and interposed between, said first assist inverter (909) and said secondary electrical ESS (907);
and the steps of:
e) transmitting a second output signal corresponding to said monitored second performance parameter to said energy transfer control module (917);
f) transmitting a control signal from said energy transfer control module (917) to a bi-directional DC/DC converter (915) in response to said first and second output signals, wherein the provision of said bi-directional DC/DC converter (915) provides a first electrical path connecting said secondary electrical ESS (907) to said primary inverter (903) via said primary power control module (905), and provides a second electrical path connecting said primary electrical ESS (901) to said first assist inverter (909) via said first assist power control module (911); and
g) transferring energy between said primary electrical ESS (901), said secondary electrical ESS (907), said first drive system and said second drive system via said bi-directional DC/DC converter (915) in response to said control signal;
h) repeating steps a) - g) at a first frequency throughout operation of said electric vehicle.

12. The method of claim 11, wherein said second drive system is further comprised of a second assist electric motor (1303) mechanically coupled to a second wheel (1307) of said second vehicle axle (1315) of the electric vehicle, a second assist inverter (1319) electrically connected to said second assist electric motor (1303), and a second assist power control module (1323) electrically connected to, and interposed between, said second assist inverter (1319) and said secondary electrical ESS (1325).

13. The method of claims 11 or 12, wherein said first performance parameter monitoring step further comprises the step of monitoring a primary electrical ESS state of charge sensor (919), and wherein said second performance parameter monitoring step further comprises the step of monitoring a secondary electrical ESS state of charge sensor (921).

14. The method of claims 11 or 12, wherein said first performance parameter monitoring step further comprises the step of monitoring a primary electrical ESS temperature sensor (923), and wherein said second performance parameter monitoring step further comprises the step of monitoring a secondary electrical ESS temperature sensor (925).

## Patentansprüche

1. Antriebssystem für ein elektrisches Fahrzeug, mit:
einem Primärantriebssystem mit:
einer ersten Fahrzeugachse (601);
einem Primärelektromotor (605), wobei der Primärelektromotor (605) mit zumindest einem Rad der ersten Fahrzeugachse (601) mechanisch gekoppelt ist, und wobei der Primärelektromotor (605) eine Antriebsleistung für das zumindest eine Rad der ersten Fahrzeugachse (601) bereitstellt;
einem Primärinverter (903), der mit dem Primärelektromotor (605) elektrisch verbunden ist;
einem Primärleistungssteuermodul (905), das mit dem Primärinverter (903) elektrisch verbunden ist; und
einem primären elektrischen Energiespeichersystem (901), ESS, das mit dem Primärleistungssteuermodul (905) elektrisch verbunden ist
und Leistung für den Primärelektromotor (605) bereitstellt;
einem Hilfsantriebssystem mit:
einer zweiten Fahrzeugachse (603);
einem Hilfselektromotor (607), wobei der Hilfselektromotor (607) mit zumindest einem Rad der zweiten Fahrzeugachse (603) mechanisch gekoppelt ist, und wobei der Hilfselektromotor (607) eine Antriebsleistung für das zumindest eine Rad der zweiten Fahrzeugachse (603) bereitstellt;
einem Sekundärinverter (909), der mit dem Hilfselektromotor (607) elektrisch verbunden ist;
einem sekundären elektrischen ESS (907) zum Bereitstellen einer Leistung für den Hilfselektromotor (607);
einem Gleichspannungswandler (915), der mit dem Primärantriebssystem und dem Hilfsantriebssystem elektrisch verbunden ist; und
einem zentralen Leistungssteuermodul (913), das mit den Primär - und Sekundärinvertern (903, 909) gekoppelt ist,
**gekennzeichnet durch**
ein Sekundärleistungssteuermodul (911), das mit dem Sekundärinverter (909) und dem sekundären elektrischen ESS (907) elektrisch verbunden ist;
wobei der Gleichspannungswandler ein bidirektionaler Gleichspannungswandler (915) ist und einen elektrischen Pfad bereitstellt, der das sekundäre elektrische ESS (907) mit dem Primärinverter (903) über das Primärleistungssteuermodul (905) verbindet, und wobei der bidirektionale Gleichspannungswandler (915) einen zweiten elektrischen Pfad bereitstellt, der das primäre elektrische ESS (901) mit dem Sekundärinverter (909) über das Sekundärleistungssteuermodul (911) verbindet; und
wobei das zentrale Leistungssteuermodul (913) Steuersignale für die Primär- und Sekundärleistungssteuermodule (905, 911) bereitstellt.

2. Antriebssystem für ein elektrisches Fahrzeug gemäß Anspruch 1, wobei das Hilfsantriebssystem des Weiteren umfasst:
einen zweiten Hilfselektromotor (1303), wobei der zweite Hilfselektromotor (1303) mit einem zweiten Rad (1307) der zweiten Fahrzeugachse (1315) mechanisch gekoppelt ist, und wobei der zweite Hilfselektromotor (1303) eine Antriebsleistung für das zweite Rad (1307) der zweiten Fahrzeugachse (1315) bereitstellt;
einen zweiten Hilfsinverter (1319), der mit dem zweiten Hilfselektromotor (1303) elektrisch verbunden ist;
ein zweites Hilfsleistungssteuermodul (1323), das mit dem zweiten Hilfsinverter (1319) elektrisch verbunden ist, und
wobei das sekundäre elektrische ESS (1325) mit dem zweiten Hilfsleistungssteuermodul (1323) elektrisch verbunden ist und Leistung für den zweiten Hilfselektromotor (1303) bereitstellt, und wobei der bidirektionale Gleichspannungswandler (1329) einen dritten elektrischen Pfad bereitstellt, der das primäre elektrische ESS (901) mit dem zweiten Hilfsinverter (1319) über das zweite Hilfsleistungssteuermodul (1323) verbindet, und wobei das zentrale Leistungssteuermodul (1327) des Weiteren mit dem zweiten Hilfsleistungssteuermodul (1323) gekoppelt ist.

3. Antriebssystem für ein elektrisches Fahrzeug nach Anspruch 1 oder 2, des Weiteren umfassend ein Energietransfersteuermodul (917; 1331), das mit dem bidirektionalen Gleichspannungswandler (915; 1329) elektrisch verbunden ist, wobei das Energietransfersteuermodul (917; 1331) Steuersignale zu dem bidirektionalen Gleichspannungswandler (915; 1329) sendet.

4. Antriebssystem für ein elektrisches Fahrzeug nach Anspruch 3, des Weiteren umfassend einen ersten Ladezustandssensor (919), der mit dem primären elektrischen ESS (901) gekoppelt ist, und einen zweiten Ladezustandssensor (921), der mit dem sekundären elektrischen ESS (907; 1325) gekoppelt ist, wobei der erste und zweite Ladezustandssensor (919, 921) mit dem Energietransfersteuermodul (917; 1331) elektrisch verbunden sind.

5. Antriebssystem für ein elektrisches Fahrzeug nach Anspruch 3, des Weiternen umfassend einen ersten Temperatursensor (923), der mit dem primären elektrischen ESS (901) gekoppelt ist, und einen zweiten Temperatursensor (925), der mit dem sekundären elektrischen ESS (907; 1325) gekoppelt ist, wobei der erste und zweite Temperatursensor (923; 925) elektrisch mit dem Energietransfersteuermodul (917; 1331) verbunden sind.

6. Antriebssystem für ein elektrisches Fahrzeug nach Anspruch 3, wobei das Energietransfersteuermodul (917; 1331) mit dem zentralen Leistungssteuermodul (913; 1327) elektrisch verbunden ist.

7. Antriebssystem für ein elektrisches Fahrzeug nach Anspruch 3, wobei das sekundär elektrische ESS (907; 1325) eine maximale Betriebskapazität hat, und wobei das Energietransfersteuermodul (917; 1331) ausgestattet ist zum Halten des zweiten elektrischen ESS (907; 1325) innerhalb eines Zustands mit einem Ladebereich zwischen 50 % der maximalen Betriebskapazität und 80 % der maximalen Betriebskapazität.

8. Antriebssystem für ein elektrisches Fahrzeug nach Anspruch 1, wobei eine erste Antriebssystemgrundgeschwindigkeit, die dem Hilfsantriebsystem und dem Hilfselektromotor (607) entspricht, zumindest 50 % höher ist als eine zweite Antriebssystemgrundgeschwindigkeit, die dem Primärantriebssystem und dem Primärelektromotor (605) entspricht.

9. Antriebssystem für ein elektrisches Fahrzeug nach Anspruch 2, wobei eine erste Antriebssystemgrundgeschwindigkeit, die dem Hilfsantriebssystem und dem Hilfselektromotor (607) entspricht, zumindest 50 % höher ist als eine zweite Antriebssystemgrundgeschwindigkeit, die dem Primärantriebssystem und dem Primärelektromotor (605) entspricht, und wobei eine dritte Antriebssystemgrundgeschwindigkeit, die dem Hilfsantriebssystem und dem zweiten Hilfselektromotor (1303) entspricht, zumindest 50 % höher ist, als die zweite Antriebssystemgrundgeschwindigkeit, die dem Primärantriebssystem und dem Primärelektromotor (605) entspricht.

10. Antriebssystem für ein elektrisches Fahrzeug nach Anspruch 1 oder 2, wobei das sekundäre elektrische ESS (907; 1325) eine minimale Laderate von 3C aufweist, wobei C der vollen Kapazität des zweiten elektrischen ESS (907; 1325) geteilt durch eine Stunde entspricht.

11. Verfahren zum Betreiben eines elektrischen Fahrzeugs, wobei das Verfahren die nachfolgenden Schritte umfasst:
a) Überwachen eines ersten Leistungsparameters, der mit einem primären elektrischen Energiespeichersystem, ESS (901) verknüpft ist, wobei das primäre elektrische ESS (901) einem ersten Antriebssystem elektrische Energie zuführt, wobei das erste Antriebssystem aus einem Primärelektromotor (605), der mechanisch mit zumindest einem Rad einer ersten Achse (601) des elektrischen Fahrzeugs gekoppelt ist, einem Primärinverter (903), der elektrisch mit dem Primärelektromotor (605) verbunden ist, und einem Primärleistungssteuermodul (905), das elektrisch mit dem Primärinverter (903) und dem primären elektrischen ESS (901) verbunden ist und dazwischen angeordnet ist, besteht; und
b) Überwachen eines zweiten Leistungsparameters, der mit einem sekundären elektrischen ESS (907) verknüpft ist, wobei das sekundäre elektrische ESS (907) einem zweiten Antriebssystem elektrische Energie zuführt, wobei das zweite Antriebssystem aus einem ersten Hilfselektromotor (607), der mit einem ersten Rad einer zweiten Fahrzeugachse (603) des elektrischen Fahrzeugs gekoppelt ist, einem ersten Hilfsinverter (909), der elektrisch mit dem ersten Hilfselektromotor (607) verbunden ist, besteht;
**gekennzeichnet durch** die nachfolgenden Schritte:
c) Übertragen eines dem überwachten ersten Leistungsparameter entsprechenden ersten Ausgangssignals zu einem Energietransfersteuermodul (917);
d) wobei das zweite Antriebssystem des Weiteren ein erstes Hilfsleistungssteuermodul (911) umfasst, das elektrisch mit dem ersten Hilfsinverter (909) und dem sekundären elektrischen ESS (907) verbunden und dazwischen angeordnet ist;
und die folgenden Schritte:
e) Übertragen eines dem überwachten zweiten Leistungsparameter entsprechenden zweiten Ausgangssignals zu dem Energietransfersteuermodul (917);
f) Übertragen eines Steuersignals von dem Energietransfersteuermodul (917) zu einem bidirektionalen Gleichspannungswandler (915) im Ansprechen auf das erste und zweite Ausgangssignal, wobei die Bereitstellung des bidirektionalen Gleichspannungswandlers (915) einen ersten elektrischen Pfad bereitstellt, der das sekundäre elektrische ESS (907) mit dem Primärinverter (903) über das Primärleistungssteuermodul (905) verbindet und einen zweiten elektrischen Pfad bereitstellt, der das primäre elektrische ESS (901) mit dem ersten Hilfsinverter (909) über das erste Hilfsleistungssteuermodul (911) verbindet; und
g) Übertragen von Energie zwischen dem primären elektrischen ESS (901), dem sekundären elektrischen ESS (907), dem ersten Antriebssystem und dem zweiten Antriebssystem über den bidirektionalen Gleichspannungswandler (915) im Ansprechen auf das Steuersignal;
h) Wiederholen der Schritte a) bis g) mit einer ersten Häufigkeit während des gesamten Betriebs des elektrischen Fahrzeugs.

12. Verfahren nach Anspruch 11, wobei das zweite Antriebssystem des Weiteren umfasst einen zweiten Hilfselektromotor (1303), der mit einem zweiten Rad (1307) der zweiten Fahrzeugachse (1315) des elektrischen Fahrzeugs mechanisch gekoppelt ist, einem zweiten Hilfsinverter (1319), der mit einem zweiten Hilfselektromotor (1303) elektrisch verbunden ist, und ein zweites Hilfsleistungssteuermodul (1323), das mit dem zweiten Hilfsinverter (1319) und dem sekundären elektrischen ESS (1325) elektrisch verbunden und dazwischen angeordnet ist.

13. Verfahren nach Anspruch 11 oder 12, wobei der Überwachungsschritt des ersten Leistungsparameters des Weiteren umfasst den Schritt des Überwachens eines Ladezustandssensors (919) des primären elektrischen ESS, und wobei der Überwachungsschritt des zweiten Leistungsparameters des Weiteren umfasst den Schritt des Überwachens eines Ladezustandssensors (921) des sekundären elektrischen ESS.

14. Verfahren nach Anspruch 11 oder 12, wobei der Überwachungsschritt des ersten Leistungsparameters des Weiteren umfasst den Schritt des Überwachens eines Temperatursensors (923) des primären elektrischen ESS und wobei der Überwachungsschritt des zweiten Leistungsparameters des Weiteren umfasst den Schritt des Überwachens eines Temperatursensors (925) des sekundären elektrischen ESS.

## Revendications

1. Système de propulsion de véhicule électrique, comprenant :
un système primaire de propulsion, comprenant
un premier essieu (601) de véhicule;
un moteur (605) électrique primaire, ce moteur (605) électrique primaire étant relié mécaniquement à au moins une roue du premier essieu (601) de véhicule, le moteur (605) électrique primaire procurant de la puissance de propulsion à la au moins une roue du premier essieu (601) de véhicule;
un onduleur (903) primaire relié électriquement au moteur (605) électrique primaire;
un module (905) primaire de commande de puissance relié électriquement à l'onduleur (903) primaire; et
un système (901) primaire d'emmagasinage d'énergie électrique, ESS, relié électriquement au module (905) primaire de commande de puissance et procurant de la puissance au moteur (605) électrique primaire;
un système d'assistance de propulsion, comprenant :
un deuxième essieu (603) de véhicule;
un moteur (607) électrique d'assistance, ce moteur (607) électrique d'assistance étant relié mécaniquement à au moins une roue du deuxième essieu (601) de véhicule, le moteur (607) électrique d'assistance procurant de la puissance de propulsion à la au moins une roue du deuxième essieu (603) de véhicule;
un onduleur (909) secondaire relié électriquement au moteur (607) électrique d'assistance;
un deuxième ESS (907) électrique secondaire procurant de la puissance au moteur (607) électrique d'assistance;
un convertisseur (915) courant continu/courant continu relié électriquement au système primaire de propulsion et au système de propulsion d'assistance; et
un module (913) central de commande de puissance relié aux onduleurs (903, 909) primaire et secondaire,
**caractérisé par**
un module (911) secondaire de commande de puissance relié électriquement à l'onduleur (909) secondaire et à l'ESS (907) électrique secondaire;
dans lequel le convertisseur courant continu/courant continu est un convertisseur (915) courant continu/courant continu bidirectionnel et procure un premier trajet électrique reliant l'ESS (907) électrique secondaire à l'onduleur (903) primaire par l'intermédiaire du module (905) primaire de commande de puissance et dans lequel le convertisseur (915) courant continu/courant continu bidirectionnel procure un second trajet électrique reliant l'ESS (901) électrique primaire à l'onduleur (909) secondaire par l'intermédiaire du module (911) secondaire de commande de puissance; et
dans lequel le module (913) central de commande de puissance procure des signaux de commande aux modules (905, 911) primaire et secondaire de commande de puissance.

2. Système de propulsion de véhicule électrique suivant la revendication 1, le système de propulsion d'assistance comprenant, en outre :
un deuxième moteur (1303) électrique d'assistance, le deuxième moteur (1303) électrique d'assistance étant relié mécaniquement à une deuxième roue (1307) du deuxième essieu (1315) de véhicule, le deuxième moteur (1303) électrique d'assistance procurant de la puissance de propulsion à la deuxième roue (1307) du deuxième essieu (1315) de véhicule;
un deuxième onduleur (1319) d'assistance relié électriquement au deuxième moteur (1303) électrique d'assistance;
un deuxième module (1323) d'assistance de commande de puissance relié électrique au deuxième onduleur (1319) d'assistance; et
dans lequel l'ESS (1325) électrique secondaire est relié électriquement au deuxième module (1323) d'assistance de commande de puissance et procure de la puissance au deuxième moteur (1303) électrique d'assistance et dans lequel le convertisseur (1329) courant continu/courant continu bidirectionnel procure un troisième trajet électrique reliant l'ESS (901) électrique primaire au deuxième onduleur (1319) d'assistance par l'intermédiaire du deuxième module (1323) d'assistance de commande de puissance et dans lequel le module (1327) central de commande de puissance est relié, en outre, au deuxième module (1323) d'assistance de commande de puissance.

3. Système de propulsion de véhicule électrique suivant les revendications 1 ou 2, comprenant, en outre, un module (917; 1331) de commande de transfert d'énergie relié électriquement au convertisseur (915; 1329) courant continu/courant continu bidirectionnel, le module (917; 1331) de commande de transfert d'énergie envoyant des signaux de commande au convertisseur (915; 1329) courant continu/courant continu bidirectionnel.

4. Système de propulsion de véhicule électrique suivant la revendication 3, comprenant, en outre, un premier état d'un capteur (919) de charge relié à l'ESS (901) électrique primaire et un deuxième état de capteur (921) de charge relié à l'ESS (907; 1325) électrique secondaire, le premier et le deuxième états de capteur (919, 921) de charge étant reliés électriquement au module (917; 1331) de commande de transfert d'énergie.

5. Système de propulsion de véhicule électrique suivant la revendication 3, comprenant, en outre, un premier capteur (923) de température relié à l'ESS (901) électrique primaire et un deuxième capteur (925) de température relié à l'ESS (907; 1325) électrique secondaire, le premier et le deuxième capteurs (923, 925) de température étant reliés électriquement au module (917; 1331) de commande de transfert d'énergie.

6. Système de propulsion de véhicule électrique suivant la revendication 3, dans lequel le module (917; 1331) de commande de transfert d'énergie est relié électriquement au module (913; 1327) central de commande de puissance.

7. Système de propulsion de véhicule électrique suivant la revendication 3, dans lequel l'ESS (907; 1325) électrique secondaire a une capacité maximum de fonctionnement et dans lequel le module (917; 1331) de commande de transfert d'énergie est configuré pour maintenir l'ESS (907; 1325) électrique secondaire dans une plage d'état de charge entre 50% de la capacité de fonctionnement maximum et 80% de la capacité de fonctionnement maximum.

8. Système de propulsion de véhicule électrique suivant la revendication 1, dans lequel une première vitesse de base du système de propulsion correspondant au système de propulsion d'assistance et au moteur (607) électrique d'assistance est plus grande d'au moins 50% qu'une deuxième vitesse de base du système de propulsion correspondant au système de propulsion primaire et au moteur (605) électrique primaire.

9. Système de propulsion de véhicule électrique suivant la revendication 2, dans lequel une première vitesse de base du système de propulsion correspondant au système de propulsion d'assistance et au moteur (607) électrique d'assistance est plus grande d'au moins 50% qu'une deuxième vitesse de base du système de propulsion correspondant au système de propulsion primaire et au moteur (605) électrique primaire et dans lequel une troisième vitesse de base du système de propulsion correspondant au système de propulsion d'assistance et au deuxième moteur (1303) électrique d'assistance est plus grande d'au moins 50% que la deuxième vitesse de base du système de propulsion correspondant au système de propulsion primaire et au moteur (605) électrique primaire.

10. Système de propulsion de véhicule électrique suivant les revendications 1 ou 2, dans lequel l'ESS (907; 1325) électrique secondaire a un taux de charge minimum de 3C, C étant la pleine capacité de l'ESS (907; 1325) électrique secondaire divisé par 1 heure.

11. Procédé pour faire fonctionner un véhicule électrique, le procédé comprenant les stades dans lesquels :
a) on contrôle un premier paramètre de performance associé à un système primaire d'accumulation d'énergie électrique ESS (901), l'ESS (901) électrique primaire fournissant de l'énergie électrique à un premier système de propulsion, le premier système de propulsion étant constitué d'un moteur (605) électrique primaire relié mécaniquement à au moins une roue d'un premier essieu (601) du véhicule électrique, un onduleur (903) primaire relié électriquement au moteur (605) électrique primaire et un module (905) primaire de commande de puissance relié électriquement à l'onduleur (903) primaire et à l'ESS (901) électrique primaire et interposé entre eux; et
b) on contrôle du deuxième paramètre de performance associé à un deuxième ESS (907) électrique secondaire, l'ESS (907) électrique secondaire fournissant de l'énergie électrique à un deuxième système de propulsion, le deuxième système de propulsion étant constitué d'un premier moteur (607) électrique d'assistance relié mécaniquement à une première roue d'un deuxième essieu (603) du véhicule électrique, un premier onduleur (909) d'assistance relié électriquement au premier moteur (607) électrique d'assistance;
**caractérisé en ce qu'**il comprend, en outre, les stades dans lesquels :
c) on transmet un premier signal de sortie correspondant au premier paramètre de performance contrôlé à un module (917) de commande de transfert d'énergie;
d) dans lequel le deuxième système de propulsion comprend, en outre, un premier module (911) d'assistance de commande de puissance relié électriquement au premier onduleur (909) d'assistance et au deuxième ESS (907) électrique secondaire et interposé entre eux;
et les stades dans lesquels :
e) on transmet un deuxième signal de sortie correspondant au deuxième paramètre de performance contrôlé au module (917) de commande de transfert d'énergie;
f) on transmet un signal de commande du module (917) de commande de transfert d'énergie à un convertisseur (915) courant continu/courant continu bidirectionnel en réaction au premier et au deuxième signaux de sortie, le convertisseur (915) courant continu/courant continu bidirectionnel procurant un premier trajet électrique reliant l'ESS (907) électrique secondaire à l'onduleur (903) primaire par l'intermédiaire du module (905) primaire de commande de puissance et procurant un deuxième trajet électrique reliant l'ESS (901) électrique primaire au premier onduleur (909) d'assistance par l'intermédiaire du premier module (911) d'assistance de commande de puissance; et
g) on transfère de l'énergie entre l'ESS (901) électrique primaire, l'ESS (907) électrique secondaire, le premier système de propulsion et le deuxième système de propulsion par l'intermédiaire du convertisseur (915) courant continu/courant continu bidirectionnel en réaction au signal de commande;
h) on répète les stades a) à g) à une première fréquence pendant tout le fonctionnement du véhicule électrique.

12. Procédé suivant la revendication 11, dans lequel le deuxième système de propulsion est constitué, en outre, d'un deuxième moteur (1303) électrique d'assistance relié mécaniquement à une deuxième roue (1307) du deuxième essieu (1315) du véhicule électrique, un deuxième onduleur (1319) d'assistance relié électriquement au deuxième moteur (1303) électrique d'assistance et un deuxième module (1323) d'assistance de commande de puissance relié électrique au deuxième onduleur (1319) d'assistance et à l'ESS (1325) électrique secondaire et interposé entre eux.

13. Procédé suivant les revendications 11 ou 12, dans lequel le stade de contrôle d'un premier paramètre de performance comprend, en outre, le stade de contrôle d'un capteur (919) d'état de charge de l'ESS électrique primaire et dans lequel le stade de contrôle d'un deuxième paramètre de performance comprend, en outre, le stade de contrôle d'un capteur (921) d'état de charge de l'ESS électrique secondaire.

14. Procédé suivant les revendications 11 ou 12, dans lequel le stade de contrôle d'un premier paramètre de performance comprend, en outre, le stade de contrôle d'un capteur (923) de température de l'ESS électrique primaire et dans lequel le stade de contrôle d'un deuxième paramètre de performance comprend, en outre, le stade de contrôle d'un capteur (925) de température de l'ESS électrique secondaire.
